# FASCICULE DE BREVET EUROPEEN

(11) **EP 0 755 632 B1**
(45) Date de publication et mention de la délivrance du brevet: **12.09.2001**
(21) Numéro de dépôt: 96201692.9
(22) Date de dépôt: 18.06.1996
(51) Int. Cl.: A23G 1/00, A23G 1/02

(54) **Traitement enzymatique du cacao**
Enzymatische Behandlung von Kakao
Enzymatic treatment of cocoa

(30) Priorité: 20.06.1995 EP 95201668
(43) Date de publication de la demande: 29.01.1997
(73) Titulaire: SOCIETE DES PRODUITS NESTLE S.A., 1800 Vevey (CH)
(72) Inventeur: Hansen, Carl Erik, 1066 Epalinges (CH); Klueppel, Anthony, Dublin, OH 43017 (US); Raetz, Eric, 1012 Lausanne (CH)

(56) Documents cités:
- EP-A- 0 298 419
- EP-A- 0 420 979
- EP-A- 0 461 261
- CH-A- 679 629
- FR-A- 2 406 665
- US-A- 3 970 520
- PATENT ABSTRACTS OF JAPAN vol. 006, no. 102 (C-107), 11 Juin 1982 & JP-A-57 033547 (FUJI OIL CO), 23 Février 1982,

## Description

L'invention concerne un procédé de traitement enzymatique d'un grué ou d'une liqueur de cacao pour en améliorer la composition en précurseurs d'arôme, et permettant d'utiliser une large gamme de fèves de cacao dans divers états de fermentation.

### Etat de la technique

La qualité d'un chocolat est directement influencée par la provenance géographique et génétique, et les conditions de traitement des fèves de cacao, depuis leur culture en champs jusqu'à leur transformation en usine. Les fèves de cacao une fois récoltées sont ainsi soumises dans leur pays d'origine à une fermentation et à un séchage naturel qui sont destinés à faire apparaître les précurseurs d'arôme. Malheureusement, la récolte à maturité des fèves et les conditions de leur fermentation ne sont pas toujours contrôlés d'une manière adéquate. De plus, les trois types principaux de cacaoyers de l'espèce *Theobroma cacao*, appelés Criollo, Forastero et Trinitario, produisent chacun des fèves ayant une composition différente. Enfin, les fèves séchées peuvent être aussi abîmées au cours de leur transport jusque dans les pays spécialisés dans la transformation des fèves. L'industrie doit donc faire face à une grande variabilité de composition des lots de fèves de cacao (voir par exemple Smaffer M., The Manufacturing Confectioner, 92-94, Jun 1994).

Les fèves de cacao fermentées et séchées sont ensuite traditionnellement soumises à un concassage plus ou moins poussé, les enveloppes sont séparées, puis elles sont soumises à une torréfaction, combinée le cas échéant avec une alcalinisation, qui sont destinées à faire apparaître l'arôme et la couleur du cacao. L'étape de torréfaction fait en effet intervenir des réactions de Maillard entre les sucres réducteurs et les produits de dégradation des protéines, notamment les acides aminés et les produit d'hydrolyse (Wood and Lass, Cocoa, Longman Scientific&Technical, Longman Group UK, England, 1985, ISBN 0-582-46352-1).

Les précurseurs d'arôme apparaissent seulement lors de la fermentation naturelle des fèves, du fait de réactions d'hydrolyses. Des expériences d'incubation *in-vitro* de fèves ou de fragments de fèves de cacao non fermentées ont ainsi montré que ces réactions d'hydrolyses sont dépendantes du pH, de la température et de la compartimentation des enzymes et des substrats dans la fève. De plus les réactions d'hydrolyses sont aussi sensibles à la présence de polyphénols. Il est ainsi avantageux d'extraire à l'acétone les polyphénols des fèves, et aussi d'incuber lesdites fèves dans l'acide acétique pour décloisonner les enzymes et les substrats (Biehl B. et al., J. Sci. Food. Agric., 33, 1280-1290, 1982).

De plus, d'autres travaux ont montré que les fèves de cacao comprennent au moins trois activités protéolytiques impliquées dans l'apparition des précurseurs d'arôme de cacao, à savoir une endoprotéase ayant une activité optimale à pH 3,5, une carboxypeptidase ayant une activité optimale à pH 5,8, et une aminopeptidase ayant une activité optimale à pH 7. Des expériences d'hydrolyse de la globuline de fèves de cacao purifiée (protéine présentant sur gel de chromatographie SDS-PAGE deux bandes de 31kD et 47kD), dont les polyphénols ont été extraits, avec des protéases commerciales et/ou l'endoprotéase et la carboxypeptidase de cacao purifiées ont montré qu'il était préférable d'hydrolyser la globuline successivement par l'endoprotéase de cacao à pH 3,5, puis par la carboxypeptidase de cacao ou une carboxypeptidase commerciale à pH 5-6. De cette manière, on obtient une composition en produits d'hydrolyse et en acides aminés qui est adéquate pour retrouver un arôme de cacao lors d'une torréfaction subséquente du mélange en présence de sucres réducteurs (Voigt J. et al., Food Chemistry, 50, 177-184, 1994).

Par ailleurs, US2965490 décrit un procédé d'hydrolyse *in-vitro* de fèves de cacao non-fermentées (fèves vertes) destiné à remplacer la fermentation naturelle des fèves. A cet effet, on hydrolyse à l'acide ou enzymatiquement les protéines de fèves de cacao vertes, on hydrolyse enzymatiquement les carbohydrates desdites fèves pour produire des sucres simples, et on fait réagir les deux hydrolysats dans des conditions anhydres à une température et pendant un temps suffisant pour produire un facteur aromatique. Cependant, il faut signaler que les polyphénols des graines vertes limitent particulièrement l'hydrolyse enzymatique des protéines de réserve (voir l'exemple comparatif 1 ci-après).

En définitive, les procédés et travaux décrits ci-dessus ont manifestement pour intention de remplacer la fermentation naturelle des fèves de cacao par une hydrolyse enzymatique contrôlée des fèves vertes (problème posé par les polyphénols) ou de leurs protéines purifiées (desquelles les polyphénols ont été extraits). De plus, la qualité et la quantité en précurseurs d'arôme nécessaires à la création d'un bon arôme de cacao lors d'une torréfaction ne sont pas encore connues.

### Résumé de l'invention

La présente invention a pour but de pallier la variabilité de composition en précurseurs d'arôme des fèves de cacao fermentées, et de conférer à un grué ou une liqueur de fèves de cacao fermentées une composition optimale en précurseurs d'arôme.

A cet effet dans le procédé selon la présente invention, on prépare un grué ou une liqueur de fèves de cacao fermentées 1 à 15 jours, on le mélange à au moins une protéase dans un milieu aqueux pH 3-8, et on incube le mélange pendant un temps et une température suffisante pour hydrolyser les protéines et les peptides.

De préférence, on incube le mélange pendant un temps et une température suffisante pour obtenir au moins 10µMol d'acides aminés hydrophobes par g de matière sèche et/ou au moins 1,4 fois plus de produits d'hydrolyse par rapport à ceux présents initialement dans les fèves de cacao.

Le présent procédé permet de renforcer l'hydrolyse des protéines de réserves des fèves de cacao, qui a eu lieu initialement lors de la fermentation naturelle des fèves, jusqu'à l'obtention de quantités suffisantes et une composition correcte en acides aminés et en produit d'hydrolyse.

La torréfaction subséquente du mélange selon l'invention permet alors d'obtenir un bon arôme de cacao, qui peut même être plus fort ou plus concentré par rapport à celui obtenu après torréfaction de fèves de cacao fermentées traditionnellement.

On peut aussi utiliser des fèves de cacao prises à divers stades de fermentation, comme par exemple des fèves peu fermentées ne contenant pas assez de précurseurs d'arômes, des fèves trop fermentées ne contenant pas la bonne composition en précurseurs d'arômes, ou des fèves mal fermentées comme des fèves acides contenant une mauvaise composition en précurseurs d'arôme. De même, les fèves de cacao peuvent être d'origines végétales et géographiques différentes. Le présent procédé permet ainsi d'homogénéiser la composition en précurseurs d'arôme d'un mélange de fèves de provenance et de stades de fermentation différents.

De plus, l'hydrolyse d'un grué ou d'une liqueur de cacao par des enzymes techniques est surprenante du fait de leur sensibilité aux polyphénols des fèves. On a pu montrer que des fèves fermentées naturellement au moins 1 jour présentent un taux en polyphénols suffisamment bas pour que les enzymes techniques ne soient pas significativement inhibées dans le présent procédé. Par contre, des fèves vertes présentent un taux trop élevé en polyphénols pour être utilisées dans le présent procédé.

En particulier, l'ajout d'une invertase permet d'augmenter avantageusement la teneur naturelle en glucose et en fructose du mélange, ce qui favorise la formation d'arôme lors d'une torréfaction subséquente du mélange.

Enfin, l'utilisation possible de diverses enzymes techniques dans la présente invention ouvre la possibilité de créer des variants d'arôme de cacao qui peuvent être appréciées du consommateur.

### Figure 1:

représentation de la quantité de glucose produit par une invertase dans un mélange d'eau et de grué de fèves de cacao pas assez fermentées, selon le temps de traitement et en fonction de la quantité d'invertase ajoutée.

### Description détaillée de l'invention

Une unité d'activité enzymatique est définie dans la suite de la description par des µmol de produit transformé par min. De même, les pourcentages sont données en poids sauf indication contraire.

L'expression "fèves de cacao peu ou pas assez fermentées" désigne des fèves fermentées traditionnellement environ 1 à 4 jours puis séchées, dont les protéines présentent par chromatographie SDS-PAGE sur gel de polyacrylamide 2 bandes visibles correspondant aux protéines de réserve 21kD et 31kD/47kD (voir WO91/00913 et WO91/00914). Par ailleurs ces fèves ne présentent pas une quantité suffisante en acides aminés et en peptides pour former un arôme de cacao lors d'une torréfaction subséquente.

L'expression "fèves de cacao bien fermentées" désigne des fèves fermentées et séchées traditionnellement environ 2 à 10 jours, et dont les protéines présentent par chromatographie SDS-PAGE sur gel de polyacrylamide une bande visible correspondant à la protéine de réserve 21kD, les deux bandes correspondant à la protéine de 31kD/47kD étant partiellement ou complètement dégradées. Par ailleurs ces fèves présentent une quantité suffisante en acides aminés et en peptides pour former un arôme de cacao lors d'une torréfaction subséquente.

L'expression "fèves de cacao trop fermentées" désigne des fèves fermentées et séchées traditionnellement environ 7 à 15 jours, dont les protéines ne présentent pas par chromatographie SDS-PAGE sur gel de polyacrylamide de bandes visibles et distinctes correspondant aux protéines de réserve 21kD et 31kD/47kD. Par ailleurs ces fèves présentent une quantité suffisante en acides aminés, mais une quantité insuffisante en peptides pour former un arôme de cacao lors d'une torréfaction subséquente.

Enfin, au sens de la présente invention un grué est obtenu par le concassage classique de fèves de cacao fermentées ou non, et une liqueur de cacao est obtenue par le broyage plus ou moins poussé desdites fèves ou du grué jusqu'à ce que le beurre de cacao soit libéré des cellules.

Pour mettre en oeuvre le présent procédé, on prépare un grué ou une liqueur de fèves de cacao fermentées 1 à 15 jours. On peut donc utiliser, en mélange ou non, des fèves de cacao prises à divers stades de fermentation, comme des fèves peu fermentées, bien fermentées, trop fermentées ou mal fermentées, par exemple. On peut aussi utiliser, en mélange ou non, des fèves de cacao provenant de divers génotypes de cacaoyers *Theobroma cacao* Criollo, Forastero et/ou Trinitario, par exemple. On peut réduire en une fine poudre le grué ou la liqueur, toutefois il convient de remarquer que si l'on traite enzymatiquement le grué ou la liqueur à une température supérieure à 35-45°C, les morceaux de grué ou liqueur vont fondre, permettant ainsi aux enzymes d'accéder à la matière intime du mélange.

On mélange ensuite le grué ou la liqueur à au moins une protéase dans un milieu aqueux pH 3-8. La protéase peut être choisie seule ou en combinaison dans le groupe formé par les endoprotéases, les carboxypeptidases et les aminopeptidases, par exemple. Le pH du milieu aqueux peut être ajusté par adjonction d'un acide minéral ou organique, ou d'un tampon choisi parmi ceux couramment utilisés dans les procédés industriels alimentaires, notamment les tampons basés sur le citrate, le phosphate ou l'acétate, par exemple. En particulier, on peut préférer un pH3-5 de manière à activer aussi les endoprotéases endogènes de la fève, cependant il est préférable de choisir en conséquence une protéase technique qui est active dans ce domaine d'acidité.

Le mélange peut comprendre 10-80% d'un grué ou d'une liqueur de cacao, notamment 20-70%, et 1-100 unités de protéase par g de mélange, notamment 0,01-5% (poids/poids) d'une préparation de protéase technique commerciale, par exemple.

Pour mettre en oeuvre le présent procédé, on incube ensuite le mélange pendant un temps et une température suffisante pour hydrolyser les protéines et peptides du mélange.

De préférence, on incube le mélange pendant un temps et une température suffisante pour obtenir au moins 10µmol d'acides aminés hydrophobes par g de matière sèche et/ou au moins 1,4 fois plus, voire 1,7 ou même 2 fois plus de produits d'hydrolyse par rapport à ceux présents initialement dans les fèves de cacao traitées. Dans ce cadre, on peut comparer la quantité de mêmes produits d'hydrolyse (peptides et acides-aminés) que l'on retrouve dans les grués obtenus avant et après traitement selon l'invention. On peut aussi tenir compte de l'apparition de nouveaux produits d'hydrolyse par rapport à ceux présents dans le grué non traité selon l'invention, en se limitant toutefois à ceux qui apparaissent significativement lors de la fermentation naturelle de fèves vertes, par exemple. En particulier, on compare la quantité de quatres produits d'hydrolyse ayant des temps de rétention d'environ 9, 17, 24 et 29,5 min lors d'une chromatographie sur une colonne HPLC Reverse-Phase C18 (n°218TP54 Vydac; USA) caractérisée par un débit constant de 1ml/min et des éluants consistant en une solution aqueuse comprenant 0,1% d'acide trifluoroacétique et 2% d'acetonitrile pendant 10 min, suivi d'un gradient linéaire comprenant 0,1% d'acide trifluoroacétique et de 2% à 52,7% d'acétonitrile pendant 50min. Les produits d'hydrolyse élués sont détectés à 215 et 280nm.

De même, on peut prendre en compte comme acides aminés hydrophobes, uniquement ceux présents majoritairement dans le grué traité selon l'invention, en particulier la phénylalanine, la leucine et l'alanine, par exemple.

Pour obtenir une quantité suffisante d'acides aminés hydrophobes et de produit d'hydrolyse, on peut incuber le mélange à 10-60°C pendant 30 min à 20 h, par exemple. Cependant, la température et le temps d'hydrolyse devront être choisis en fonction du milieu, du type d'enzyme, du degré de fermentation des fèves et de la provenance des fèves.

Dans un premier mode de réalisation particulier de la présente invention, on prépare un grué ou une liqueur de fèves de cacao fermentées 1 à 15 jours, on le mélange à un milieu aqueux pH3-6, on incube le mélange à 40-60°C pendant 10 min à 20h de manière à favoriser l'action de l'endoprotéase de cacao, on ajuste le pH du mélange à pH4-8, on lui ajoute au moins une protéase technique, et on l'incube à 10-60°C pendant 5 min à 20h, de manière à obtenir une hydrolyse des protéines et des peptides, mais de préférence au moins 10µmol d'acides aminés hydrophobes par g de matière sèche et/ou au moins 1,4 fois plus de produits d'hydrolyse (peptides et acides aminés) par rapport à ceux présents initialement dans les fèves de cacao.

Dans un deuxième mode de réalisation particulier de la présente invention, on prépare un grué ou une liqueur de fèves de cacao fermentées 1 à 15 jours, on le mélange à un milieu aqueux pH4-8, on lui ajoute au moins une protéase, et on l'incube à 10-60°C pendant 5 min à 20h, de manière à obtenir une hydrolyse des protéines et des peptides, mais de préférence au moins 10µmol d'acides aminés hydrophobes par g de matière sèche et/ou au moins 1,4 fois plus de produits d'hydrolyse (peptides et acides aminés) par rapport à ceux présents initialement dans les fèves de cacao. De préférence, on choisit un domaine de pH dans lequel restent actives l'endoprotéase de cacao ainsi que la protéase technique.

Enfin, dans un troisième mode de réalisation particulier de la présente invention, on peut ajouter au mélange réactionnel, au moins une enzyme choisie dans le groupe formé par les invertases, les glycosidases, les cellulases, les pectinases et les oxydases. De préférence, on ajoute au moins une desdites enzymes à raison de 0,01 à 5% d'une préparation commerciale d'enzyme, ou 1-100 unités g de mélange. Le mélange réactionnel doit être compris comme l'un des mélanges décrit ci-dessus que l'on incube pendant un certain temps (comprenant la protéase technique ou non).

En particulier, on combine le traitement d'une protéase technique, et/ou de l'endoprotéase de cacao avec une invertase technique. Ce traitement permet avantageusement de produire des acides aminés hydrophobes et autres produits d'hydrolyses qui se combineront au glucose et fructose lors d'une torréfaction subséquente pour donner un arôme plus chocolaté (qui évoque une richesse de goût). D'une manière inattendue, on peut mettre en oeuvre l'endoprotéase de cacao, les protéase et invertase techniques en une seule étape (deuxième mode de réalisation de l'invention), en choisissant cependant un domaine de pH favorable à l'activité de toutes les enzymes (l'endoprotéase, la protéase technique et l'invertase)

Si l'on n'utilise pas d'invertase, il peut aussi être avantageux d'ajouter au moins 0,1% d'un sucre réducteur au mélange final avant la torréfaction, comme par exemple du glucose et/ou du fructose à raison de 0,1 à 5%, par exemple.

Enfin après avoir mis en oeuvre le présent procédé, on peut conserver le mélange en inactivant les enzymes à la chaleur (80-120°C pendant 1 à 60 min) ou par un traitement sous haute pression hydrostatique (supérieur à 500000 kPa), par exemple. On peut aussi sécher le mélange par exemple par lyophilisation, par atomisation, par aspiration par le vide, ou par évaporation de l'eau au cours d'un chauffage modéré du mélange. De préférence, on sèche le mélange jusqu'à atteindre une teneur en humidité du mélange inférieure à 10%, notamment 5%. On peut également soumettre le mélange à une torréfaction et/ou une alcalinisation classiques, comme celle décrite dans EP0226727.

De préférence, après avoir mis en oeuvre le présent procédé, on ajuste le pH du mélange à 5-6, on le sèche et on le torréfie.

L'invention concerne aussi les compositions comprenant un grué ou une liqueur de fèves de cacao fermentées 1 à 15 jours, et une protéase technique et/ou une invertase technique. Si les enzymes sont encore actives, les compositions peuvent contenir au moins 1 unité d'activité enzymatique par gramme de composition. Dans le cas où ces enzymes sont inactives, suite à un traitement de dénaturation à la chaleur par exemple, elles peuvent être cependant encore identifiées à l'aide d'anticorps appropriés, ce qui traduit l'utilisation antérieure de cette enzyme.

Ces compositions peuvent donc comprendre un grué ou une liqueur de cacao préparé à partir d'un mélange de fèves à divers états de fermentation et/ou provenant de divers génotypes de cacaoyer. Ces compositions peuvent être l'une des composition présentées ci-dessus dans le cadre du présent procédé. L'invention recouvre donc aussi les compositions séchées, comprenant un ajout de glucose et/ou de fructose, et en particulier les cacaos (poudre, grué, liqueur..) obtenus par torréfaction desdites composition. Ces compositions se distinguent en particulier de l'état de la technique du fait qu'ils sont issues d'un mélange comprenant des fèves pris à divers états de fermentation et/ou provenant de divers génotypes de cacaoyer, et des protéases et/ou des invertases techniques actives ou inactives.

La présente invention est décrite plus en détail ci-après à l'aide des exemples qui vont suivre. Ces exemples sont précédés d'une description de divers tests, et d'une brève présentation de la figure. Il va de soi toutefois, que ces exemples sont donnés à titre d'illustration de l'objet de l'invention dont ils ne constituent en aucune manière une limitation.

### Analyse des acides aminés

On soumet le mélange inactivé selon l'invention à un bain d'ultrasons pendant 10 min, on l'homogénéise pendant 2 fois 1 min à 9600rpm (Polytron), on le centrifuge pendant 10 min à 10000g, on récolte le surnageant, on le filtre, puis on analyse son contenu en acides aminés au moyen du kit ACCQTag® (Waters, USA).

Pour cela, 20µl d'échantillon ou de standard est mélangé à 140µl d'un tampon borate, on ajoute 40µl d'un réactif comprenant du 6-aminoquinolyl-N-hydroxysuccinimidyl carbamate (AQC), on soumet le mélange à un vortex, on le laisse reposer à température ambiante pendant 1min, on le chauffe à 55°C pendant 7min, on l'injecte dans une colonne HPLC Reverse-Phase C18 (Nova-Pak C18, 4µm; USA), et on élue les acides aminés dérivés à 36,5°C, à un débit de 1ml/min, dans un gradient: 100% de solvant A pendant 10min, 98% de solvant A pendant 10,5min, 93% de solvant A pendant 26 min, 90% de solvant A pendant 30 min, 67% de solvant A pendant 43 min, 30% de solvant A pendant 53 min, 100% d'eau pendant 54 min et 100% d'un solvant acetonitrile/eau (65%/35%) pendant 60 min (solvant A= tampon phosphate fourni par Waters).

Les acides aminés dérivés et élués sont détectés à 395nm par un détecteur Applied Biosystem model 980. Les acides aminés du mélange sont ensuite quantifiés en µmol par gramme de mélange sec par rapport aux échantillons standard dérivés et élués dans les mêmes conditions.

### Analyse des produits d'hydrolyse

On ajoute au mélange inactivé selon l'invention du méthanol jusqu'à une concentration de 70%, on ajoute 1,5 ml de méthanol 70% et 100mg de polyvinylpolypyrrolidone (PVPP), on laisse agir sous agitation douce 1h à température ambiante, on centrifuge 2 fois pendant 10 min à 20000g, on récolte le surnageant, on élimine le méthanol par aspiration par le vide, on ajoute 0,35ml d'eau au culot, on centrifuge la solution 5 min à 20000g, on la filtre, puis on analyse son contenu en produit d'hydrolyse par élution sur une colonne HPLC Reverse-Phase C18 (n°218TP54 Vydac; USA) à un débit de 1ml/min dans 0,1% d'acide trifluoroacétique et 2% d'acetonitrile dans de l'eau pendant 10 min, suivi d'un gradient linéaire comprenant 0,1% d'acide trifluoroacétique et de 2 à 52,7% d'acétonitrile pendant 50min. Les produits d'hydrolyse élués sont détectés à 215 et 280nm.

Dans le cadre de la présente invention, on détermine l'augmentation de la quantité de produits d'hydrolyse (peptides et acides-aminés) dans le mélange traité selon l'invention par rapport à ceux présents dans le mélange non traité, en comparant les aires des pics d'élution de quatre produits d'hydrolyse ayant un temps de rétention de 9, 17, 24 et 29,5 min. Ces pics sont retrouvés généralement lors de la fermentation traditionnelle de fèves de cacao des cacaoyers *Theobroma cacao* Trinitario, Criollo et Forastero. On ne peut exclure cependant que d'autres produits d'hydrolyse puissent aussi apparaîtres lors de la fermentation traditionnelle de fèves de cacao provenant de certains génotypes particuliers de cacaoyers.

### Analyse des sucres

On incube le mélange inactivé selon l'invention pendant 30min à 60°C sous agitation, on le laisse reposer à température ambiante pendant 15-30min, on le centrifuge 2 fois à 20000g pendant 5min, on filtre le surnageant sur une cartouche Waters Sep-Pak C18, on filtre à nouveau le filtrat sur un filtre Sartorius Minisart (SRP15, n°1755K), et on détermine son contenu en glucose par la méthode spectrophotométrique "God-Perid" à l'aide du kit n°124028 de Boehringer-Mannheim (Allemagne), ou encore par HPLC.

### Analyse sensorielle

On inactive à la chaleur le grué ou la liqueur hydrolysé selon l'invention, on ajuste le pH à 5-6, on le sèche par évaporation sous vide de l'eau lors d'un chauffage modéré (<60°C) jusqu'à ce que la teneur en humidité soit inférieure à 10%, puis on le torrifie dans un four à 130°C pendant 15 min. Les arômes générés par la torréfaction sont alors évalués par un panel de personnes habituées à évaluer de tels arômes.

Tous les arômes sont comparés à ceux produits par des grués ou liqueurs de fèves cacao, simplement séchés et torréfiés dans les mêmes conditions, qui sont issus de fèves de cacao Sanchez et Sulawesi pas assez fermentés, et de fèves de cacao Ghana bien fermentées (fèves connues de l'homme du métier).

Chaque échantillon est évalué pour les sensations suivantes "arôme de cacao" (issu des fèves Ghana), "d'acidité" (qualifie la saveur élémentaire provoquée par des solutions aqueuses diluées de la plupart des acides), "d'amertume" (qualifie la saveur élémentaire provoquée par des solutions diluées de divers substances, comme la quinine, ressentie en haut de la langue et sur l'arrière du palais), "d'astringence "(le terme a été élargi à la totalité des actions des polyphénols qui se traduisent par des sensations de caractère physique depuis la supression de l'onctuosité jusqu'à l'astringence au sens médical qui recouvre une constriction et/ou une crispation des tissus), "fruité" (note gustative appartenant au bouquet et qui évoque le fruit arrivé à maturité: pomme, banane, poire...), "fleuri" (correspond à une sensation olfactive rappellant les fleurs en général: rose, jasmin, jacinthe, lilas...), "fumé" (saveur et odeur de jambon fumé; défaut provenant en général du séchage des fèves de cacao après fermentation au moyen d'un feu de bois), "moisi", et "cru" (caractère de cacaos insuffisamment rôtis où l'arôme n'est pas développé; lié à une astringence et une acidité; rappelle les arachides crues).

### Exemple comparatif 1

On prépare classiquement un grué de fèves de cacao vertes de *Theobroma cacao* Trinitario ICS-95, on mélange à 1 ml d'un tampon 200mM citrate pH4, 100mg dudit grué et le cas échéant 100mg de PVPP qui forme un complexe avec les polyphénols. On incube le mélange pendant 2h à 50°C, on ajuste son pH avec 1 ml d'un tampon 200mM citrate pH7, on lui ajoute le cas échéant 40µl de carboxypeptidase A (0,06 unités/µl, Sigma), on l'incube à 25°C pendant 1h, puis on stoppe la réaction en chauffant le mélange à 95°C, pendant 5 min.

On analyse ensuite le degré d'hydrolyse des protéines de cacao en déterminant au moyen des méthodes décrites ci-dessus la teneur en acides aminés libres dans les grué traités, et les aires des pics d'élution de quatres produits d'hydrolyse dans le grué initial et les grués traités (produits associés à la fermentation naturelle des fèves: acides aminés et peptides).

Les résultats présentés au tableau 1 ci-dessous montrent qu'une autolyse du grué à pH4 et à pH7 ne permet pas d'obtenir une augmentation significative en précurseurs d'arômes par rapport à ceux présents initialement dans les fèves vertes. Par contre une autolyse à pH4 du grué comprenant du PVPP, suivie d'une hydrolyse enzymatique des protéines à pH7 permet d'obtenir une augmentation significative des précurseurs d'arôme. Les polyphénols des fèves vertes ont donc un effet inhibiteur important.

**Tableau 1**

| Traitement enzymatique | Addition de PVPP | Acides aminés (µmol/g poids sec) | | Aires des produits d'hydrolyse (unités arbitraires) | | | |
|---|---|---|---|---|---|---|---|
| | | Total | Hydrophobe | Pic 1 | Pic 2 | Pic 3 | Pic 4 |
| non | - | 15,9 | 2,5 | 604 | 551 | 716 | - |
| oui | - | 26,8 | 8,3 | 695 | 1224 | 696 | - |
| oui | + | 34,9 | 12,1 | 1559 | 2847 | 2854 | 1804 |
| (Le temps de rétention des produits d'hydrolyse 1 à 4 est respectivement de 9, 17, 24 et 29,5 min) | | | | | | | |

### Exemple comparatif 2

On prépare classiquement des grués de fèves de cacao de *Theobroma cacao* Trinitario ICS-95 qui ont été traditionnellement fermentées pendant 1, 2, 3, 4, 5 et 7 jours, puis séchées. On analyse ensuite le degré d'hydrolyse des protéines des grués en déterminant au moyen de la méthode décrite ci-dessus les aires des pics d'élution de quatres produits d'hydrolyse dans les grués fermentés (produits associés à la fermentation naturelle des fèves). Les résultats sont présentés dans le tableau 2 ci-après.

L'analyse des protéines des grués par chromatographie SDS-PAGE sur gel de polyacrylamide, montre une dégradation intense des bandes de 31kD et 47kD pour les fèves fermentées au moins 3 jours. Par contre, la bande de 21kD n'est pas dégradée pour les fèves fermentées 1 à 7 jours.

On torréfie à 130°C pendant 15 min dans un four les différents grués. L'analyse sensorielle de l'arôme délivré par les grués montrent qu'une fermentation des fèves de 3 jours est suffisante pour obtenir un arôme de cacao acceptable.

### Exemple 1

On prépare classiquement des grués de fèves de cacao de *Theobroma cacao* Trinitario ICS-95 qui ont été traditionnellement fermentées pendant 1, 2, 3, 4, 5 et 7 jours, puis séchées. On mélange ensuite à 100mg de chaque type de grué 1 ml d'un tampon 200mM citrate pH4, on incube le mélange pendant 2h à 50°C, on ajuste son pH avec 1 ml d'un tampon 200mM citrate pH7, on lui ajoute 40µl de carboxypeptidase A (0,06 unités/µl, Sigma), on l'incube à 25°C pendant 1h, puis on stoppe la réaction en chauffant le mélange à 95°C, pendant 5 min. On analyse ensuite le degré d'hydrolyse des protéines de cacao en déterminant au moyen des méthodes décrites ci-dessus la teneur en acides aminés libres et les aires des pics d'élution de quatres produits d'hydrolyse majoritaires des grués (produits associés à la fermentation naturelle des fèves).

Les résultats présentés dans le tableau 2 montrent que l'on peut augmenter au moins 1,4 fois la teneur en produits d'hydrolyse dans un grué provenant de fèves de cacao peu ou bien fermentées De plus, la teneur en acides aminés hydrophobes de tous les grués traités et des grués fermentées 3 à 7 jours est toujours supérieure à 10µmol par g de matière sèche.

**Tableau 2**

| Jours de fermentation | Traitement enzymatique | Aires des produits d'hydrolyse (unités arbitraires) | | | | Augmentation des produits d'hydrolyse |
|---|---|---|---|---|---|---|
| | | Pic 1 | Pic 2 | Pic 3 | Pic 4 | |
| 1 | Non | 565 | 1017 | 833 | - | |
| 1 | Oui | 1181 | 2626 | 1191 | - | x 2,06 |
| 2 | Non | 1072 | 2393 | 1190 | - | |
| 2 | Oui | 1880 | 4044 | 1968 | - | x 1,70 |
| 3 | Non | 1600 | 3643 | 1595 | 170 | |
| 3 | Oui | 2083 | 5074 | 2618 | 890 | x 1,52 |
| 4 | Non | 1583 | 3444 | 1794 | 202 | |
| 4 | Oui | 3107 | 6051 | 2836 | 596 | x 1,79 |
| 5 | Non | 1663 | 3383 | 1249 | 270 | |
| 5 | Oui | 2230 | 4719 | 2486 | - | x 1,43 |
| 7 | Non | 2061 | 3971 | 1202 | 267 | |
| 7 | Oui | 2862 | 5555 | 2563 | - | x 1,46 |
| (Le temps de rétention des produits d'hydrolyse 1 à 4 est respectivement de 9, 17, 24 et 29,5 min) | | | | | | |

### Exemple 2

On prépare classiquement des grués de fèves de cacao de *Theobroma cacao* Trinitario ICS-95 qui ont été traditionnellement fermentées pendant 1, 2, 3, 4, 5 et 7 jours, puis séchées. On mélange ensuite à 100mg de chaque type de grué 100 µl d'un tampon 200mM citrate pH4, on incube le mélange pendant 2h à 50°C, on ajuste son pH avec 100 µl d'un tampon 200mM citrate pH7, on lui ajoute 40µl de carboxypeptidase A (0,06 unités/µl, Sigma), on l'incube à 25°C pendant 1h, puis on stoppe la réaction en chauffant le mélange à 95°C, pendant 5 min. On analyse ensuite le degré d'hydrolyse des protéines de cacao en déterminant au moyen des méthodes décrites ci-dessus la teneur en acides aminés libres et les aires des pics d'élution de quatres produits d'hydrolyse des grués (produits associés à la fermentation naturelle des fèves). Les résultats sont similaires à ceux obtenus à l'exemple 1.

### Exemple 3

On prépare classiquement une liqueur de fèves de cacao pas assez fermentées provenant de divers génotypes de *Theobroma cacao.* Les protéines de ces fèves présentent par chromatographie SDS-PAGE sur gel de polyacrylamide 3 bandes visibles de protéines correspondant aux protéines de réserve 21kD et 31kD/47kD.

On détermine les teneurs en produits d'hydrolyse d'une partie de la liqueur au moyen des méthodes décrites ci-dessus. On mélange ensuite à 100mg d'une partie de la liqueur 1 ml d'un tampon 200mM citrate pH4, on incube le mélange pendant 2h à 50°C, on ajuste son pH avec 1 ml d'un tampon 200mM citrate pH7, on lui ajoute 40µl de carboxypeptidase A (0,06 unités/µl, Sigma), on l'incube à 25°C pendant 1h, puis on stoppe la réaction en chauffant le mélange à 95°C, pendant 5 min. On analyse enfin le degré d'hydrolyse des protéines en déterminant la teneur en produits d'hydrolyse de la liqueur (méthodes ci-dessus).

Les résultats présentés dans le tableau 3 ci-après montre que le traitement selon l'invention permet d'augmenter significativement la teneur en précurseurs d'arôme d'une liqueur provenant d'un mélange de fèves peu fermentées.

**Tableau 3**

| Traitement enzymatique | Acides aminés (µmol/g poids sec) | | Aires des produit d'hydrolyse (unités arbitraires) | | | |
|---|---|---|---|---|---|---|
| | Total | Hydrophobe | Pic 1 | Pic 2 | Pic 3 | Pic 4 |
| non | 22,2 | 7,7 | - | 1451 | 613 | - |
| oui | 35,9 | 14,7 | 771 | 2359 | 1115 | 724 |
| (Le temps de rétention des produits d'hydrolyse 1 à 4 est respectivement de 9, 17, 24 et 29,5 min) | | | | | | |

### Exemple 4

On traite enzymatiquement 500 g de fèves de cacao pas assez fermentées provenant de divers génotypes de *Theobroma cacao* d'une manière identique à celle décrite à l'exemple 3. On ajuste ensuite le pH du mélange inactivé à 5-6, on ajoute 0,3% de glucose et 0,6% de fructose, on le sèche par évaporation sous vide de l'eau lors d'un chauffage modéré (<60°C) jusqu'à ce que la teneur en humidité soit inférieure à 5%, on le torréfie dans un four à 130°C pendant 15 min, et on analyse l'arôme délivré par le mélange torréfié par le test sensoriel décrit ci-dessus. Les résultats montrent que les grués de fèves peu fermentées, traitées selon l'invention et torréfiées présentent un arôme intense caractéristique d'un arôme de cacao issu de fèves bien fermentées et torréfiées.

### Exemple 5

On prépare classiquement une liqueur de fèves de cacao trop fermentées provenant de divers génotypes de *Theobroma cacao.* Les protéines de ces fèves ne présentent pas par chromatographie SDS-PAGE sur gel de polyacrylamide de bandes visibles de protéines correspondant aux protéines de réserve 21kD et 31kD/47kD.

On détermine la teneur en produits d'hydrolyse d'une partie de la liqueur au moyen des méthodes décrites ci-dessus. On mélange ensuite à 100mg d'une partie de la liqueur 1 ml d'un tampon 200mM citrate pH4, on incube le mélange pendant 2h à 50°C, on ajuste son pH avec 1 ml d'un tampon 200mM citrate pH7, on lui ajoute 40µl de carboxypeptidase A (0,06 unités/µl, Sigma), on l'incube à 25°C pendant 1h, puis on stoppe la réaction en chauffant le mélange à 95°C, pendant 5 min. On analyse enfin le degré d'hydrolyse des protéines en déterminant la teneur en produits d'hydrolyse de la liqueur (méthodes ci-dessus).

Les résultats présentés dans le tableau 4 ci-après montre que le traitement selon l'invention permet d'augmenter significativement la teneur en précurseurs d'arôme de liqueur provenant d'un mélange de fèves trop fermentées.

**Tableau 4**

| Traitement enzymatique | Acides aminés (µmol/g poids sec) | | Aires des produits d'hydrolyse (unités arbitraires) | | | |
|---|---|---|---|---|---|---|
| | Total | Hydrophobe | Pic 1 | Pic 2 | Pic 3 | Pic 4 |
| non | 49,5 | 19,2 | 960 | 2192 | 727 | - |
| oui | 59,6 | 25,8 | 2102 | 4508 | 3026 | - |
| (Le temps de rétention des produits d'hydrolyse 1 à 4 est respectivement de 9, 17, 24 et 29,5 min) | | | | | | |

### Exemple 6

On traite enzymatiquement 500 g de fèves de cacao trop fermentées provenant de divers génotypes de *Theobroma cacao* d'une manière identique à celle décrite à l'exemple 5. On ajuste ensuite le pH du mélange inactivé à 5-6, on ajoute 0,3% de glucose et 0,6% de fructose, on le sèche par évaporation sous vide de l'eau lors d'un chauffage modéré (<60°C) jusqu'à ce que la teneur en humidité soit inférieure à 5%, on le torrifie dans un four à 130°C pendant 15 min, et on analyse l'arôme délivré par le mélange torréfié par le test sensoriel décrit ci-dessus. Les résultats montrent que les grués de fèves trop fermentées, traitées selon l'invention et torréfiées présentent un arôme intense caractéristique d'un arôme de cacao issu de fèves bien fermentées et torréfiées.

### Exemple 7

On prépare plusieurs grués de fèves de cacao fermentées traditionnellement 1 jour, on mélange 140 mg de chaque grué à 100µl d'une solution aqueuse d'invertase Maxinvert L10000 (Gist Brocades) comprenant différentes unités d'activités, on incube les mélanges 30 min ou 120min, on stoppe la réaction en chauffant à 95°C pendant 1 min, et on détermine le contenu en glucose de chaque mélange au moyen de la méthode décrite ci-dessus. Les résultats présentés à la figure 1 montre que 1 unité /ml d'invertase est suffisante pour hydrolyser plus de 80% du sucrose en glucose et en fructose.

### Example 8

On incube une liqueur de fèves de cacao Sanchez peu fermentées (175 g) pendant 2 h à 50 °C, dans 350 ml d'eau dont le pH est ajusté à pH 4,5 par une solution d'acide acétique (activation des endoprotéases), puis on ajuste le pH à 7 avec une solution de carbonate de potassium et on incube le mélange pendant 15 min à 50°C avec l'invertase Maxinvert L10000 (20 unités/g) et la carboxypeptidase A (0,06 unités/ml), ou on incube le mélange pendant 15 min à 50°C avec 20 unités/g d'invertase Maxinvert L10000 et 1% de protéase Corolase PP (Roehm, DE) ou pendant 60 min à 50°C avec 20 unités/g d'invertase Maxinvert L10000 et 1% de protéase Promod 192P (Biocatalyst, UK) ou 1% de protéase Promod 279P (Biocatalyst). On stoppe la réaction en chauffant le mélange à 95°C, pendant 5 min. On analyse enfin le degré d'hydrolyse des protéines en déterminant la teneur en produits d'hydrolyse de la liqueur (méthodes ci-dessus).

Après la réaction, on ajuste le pH du mélange à 5,2, on le sèche, on le torréfie et on le soumet à l'analyse sensorielle décrite ci-dessus.

Les résultats, présentés dans le tableau 5 ci-après, montrent que des précurseurs d'arôme sont formés en utilisant les préparations de protéase et d'invertase.

**Tableau 5**

| Enzymes | Acides aminés (µmol/g poids sec) | | % acide aminé hydrophobe (Phe, Leu, Ala) | Produits d'hydrolyse (aire: unité arbitraire) | | | Glucose formé (mg/g) |
|---|---|---|---|---|---|---|---|
| | Total | Hydrophobe | | Pic 1 | Pic 2 | Pic 3 | |
| Pas detraitement | 36,6 | 10,6 | 29.0 | 412 | 651 | 377 | 0.0 |
| Promod 192P | 49,8 | 15,4 | 30,9 | 607 | 1012 | 494 | 5.2 |
| Promod 279P | 53,4 | 16,3 | 30,5 | 575 | 958 | 470 | 5.6 |
| Corolase PP | 44,3 | 15,6 | 35,2 | 1053 | 1423 | 1088 | 1.7 |
| Carboxypeptidase | 37,6 | 12.9 | 34,3 | 759 | 1194 | 646 | 2.3 |
| (Le temps de rétention des produits d'hydrolyse 1 à 3 est respectivement de 9, 17 et 24 min) | | | | | | | |

### Example 9

On obtient des résultats similaires à ceux obtenus à l'exemple 8, si dans les mêmes conditions, on traite des fèves de cacao Indonésienne Sulawesi pas assez fermentées avec une protéase, et si l'invertase est remplacée par un ajout de 0,6% de fructose et 0,3% de glucose pendant le traitement enzymatique.

### Example 10

D'une manière similaire à l'exemple 8, on incube une liqueur de fèves de cacao Sanchez peu fermentées avec 20 unités/g d'invertase et avec différentes concentrations de la protéase Promod 192P, en faisant agir à pH4,5 l'endoprotéase et la protéase Promod 192 en même temps ou consécutivement. On stoppe la réaction en chauffant le mélange à 95°C, pendant 5 min (sauf pour l'essai 5). On analyse le degré d'hydrolyse des protéines en déterminant la teneur en produits d'hydrolyse de la liqueur (méthodes ci-dessus). On ajuste le pH du mélange à 5,2, on le sèche, on le torréfie et on le soumet à l'analyse sensorielle décrite ci-dessus.

Les conditions de réactions sont présentés dans le tableau 6 ci-après. Les résultats présentés au tableau 7 ci-après, montrent (1) que l'on peut réduire la concentration d'enzyme, (2) que l'on peut mettre en oeuvre l'ensemble des réactions en une seule étape, (3) que l'on peut éviter d'inactiver le mélange avant séchage, et (4) que l'on peut réduire la teneur en eau pendant l'incubation.

**Tableau 6**

| Essais | Enzyme Promod 192P | Endoprotease pH 4.5 | Promod 192P pH 4.5 | Invertase 1 h pH 4.5 | Liqueur de cacao (g) | Eau ajouté (ml) | Chauffage avant séchage | pH final |
|---|---|---|---|---|---|---|---|---|
| 1 | Controle: pas de traitement | | | | | | | |
| 2 | 1.0 % | 2 h | 1 h | 20 U/g | 175 | 350 | oui | 5.2 |
| 3 | 1.0 % | 3 h, en même temps | | 20 U/g | 175 | 350 | oui | 5.2 |
| 4 | 0.2 % | 3 h, en même temps | | 20 U/g | 175 | 350 | oui | 5.2 |
| 5 | 1.0 % | 2 h | 1 h | 20 U/g | 175 | 350 | non | 5.2 |
| 6 | 1.0% | 2 h | 1 h | 20 U/g | 175 | 175 | oui | 5.2 |

**Tableau 7**

| Essais | Acides aminés (µmol/g sec) | | % acide.aminé hydrophobe (Phe, Leu Ala) | Produits d'hydrolyse (aire: unité arbitraire) | | | Glucose formé (mg/g) |
|---|---|---|---|---|---|---|---|
| | Total | Hydrophobe | | Pic 1 | Pic 2 | Pic 3 | |
| 1 | 36.0 | 10.6 | 28.9 | 412 | 651 | 377 | 0.0 |
| 2 | 60.9 | 18.5 | 30.4 | 736 | 1277 | 560 | 4.6 |
| 3 | 69.3 | 20.7 | 29.8 | 1025 | 1692 | 751 | 4.3 |
| 4 | 46.2 | 14.0 | 30.4 | 547 | 942 | 427 | 5.0 |
| 5 | 104.6 | 31.6 | 30.2 | 1322 | 2241 | 1167 | 5.4 |
| 6 | 65.3 | 20.6 | 31.5 | 798 | 1444 | 606 | 3.8 |
| (Le temps de rétention des produits d'hydrolyse 1 à 3 est respectivement de 9, 17 et 24 min) | | | | | | | |

Après la réaction, on ajuste le pH des mélanges à 5,2, on les sèche, on les torréfie et on les soumet à l'analyse sensorielle décrite ci-dessus. Les résultats montrent que les mauvais arômes spécifiques des fèves de cacao pas assez fermentées ont disparu. De plus, l'arôme de cacao développé dans les mélanges traités se rapproche de celui désiré. En particulier, les échantillons de l'essai 5 (teneur en eau réduite) sont particulièrement préférés.

## Revendications

1. Procédé de traitement d'un grué ou d'une liqueur de cacao, dans lequel on prépare à partir de fèves de cacao fermentées 1 à 15 jours, un grué par concassage desdites fèves ou une liqueur, on le mélange à au moins une protéase technique dans un milieu aqueux pH 3-8, et on incube le mélange pendant un temps et une température suffisante pour hydrolyser les protéines et les peptides.

2. Procédé selon la revendication 1, dans lequel on incube le mélange pendant un temps et une température suffisante pour obtenir au moins 10µMole d'acides aminés hydrophobes par g de matière sèche et au moins 1,4 fois plus de produits d'hydrolyse par rapport à ceux présents initialement dans les fèves de cacao fermentées.

3. Procédé selon la revendication 1, dans lequel on prépare un grué ou une liqueur de fèves de cacao fermentées 1 à 15 jours, on le mélange à un milieu aqueux pH 3-6, on incube le mélange à 40-60°C pendant 10 min à 20 h, on ajuste le pH du mélange à pH4-8, on lui ajoute au moins une protéase technique, et on l'incube à 10-60°C pendant 5 min à 20 h.

4. Procédé selon la revendication 1, dans lequel on prépare un grué ou une liqueur de fèves de cacao fermentées 1 à 15 jours, on le mélange à un milieu aqueux pH 3-8, on lui ajoute au moins une protéase technique, et on l'incube à 10-60°C pendant 5 min à 20 h..

5. Procédé selon la revendication 1, dans lequel le grué ou la liqueur de cacao est préparé à partir d'un mélange de fèves à divers états de fermentation et/ou provenant de divers génotypes de cacaoyer.

6. Procédé selon l'une des revendications 1-5, dans lequel le mélange comprend 10-80% d'un grué ou d'une liqueur de fèves de cacao et 1-100 unité(s) de protéase technique par g de mélange.

7. Procédé selon l'une des revendications 1-5, dans lequel on ajoute en outre au mélange au moins une enzyme technique choisie dans le groupe formé par les invertases, les glycosidases, les cellulases, les pectinases et les oxydases.

8. Procédé selon l'une des revendications 1-5, dans lequel on ajoute en outre au mélange final avant la torréfaction au moins 0,1% en poids d'un sucre réducteur.

## Claims

1. Method for treating cocoa grounds or a liquor wherein, from cocoa beans fermented for 1 to 15 days, grounds are prepared by crushing the said beans or a liquor is prepared, at least one technical protease in an aqueous medium at pH 3-8 is mixed therewith and the mixture is incubated for a sufficient time and at a sufficient temperature to hydrolyse the proteins and peptides.

2. Method according to claim 1, wherein the mixture is incubated for a sufficient time and at a sufficient temperature to obtain at least 10 *µ*Mole of hydrophobic amino acids per g of dry matter and at least 1.4 times more hydrolysis products compared with those initially present in the fermented cocoa beans.

3. Method according to claim 1, wherein grounds or a liquor are/is prepared from cocoa beans fermented for 1 to 15 days, an aqueous medium at pH 3-6 is mixed therewith, the mixture is incubated at 40-60°C for 10 min to 20 h, the pH of the mixture is adjusted to pH 4-8, at least one technical protease is added thereto and the mixture is incubated at 10-60°C for 5 min to 20 h.

4. Method according to claim 1, wherein grounds or a liquor are/is prepared from cocoa beans fermented for 1 to 15 days, an aqueous medium at pH 3-6 is mixed therewith, at least one technical protease is added thereto and the mixture is incubated at 10-60°C for 5 min to 20 h.

5. Method according to claim 1, wherein cocoa grounds or liquor are/is prepared from a mixture of beans in various states of fermentation and/or coming from various genotypes of cocoa tree.

6. Method according to one of claims 1-5, wherein the mixture comprises 10-80 % of cocoa bean grounds or liquor and 1-100 units of technical protease per g of mixture.

7. Method according to one of claims 1-5, wherein at least one technical enzyme chosen from the group formed of invertases, glycosidases, cellulases, pectinases and oxydases is additionally added to the mixture.

8. Method according to one of claims 1-5, wherein at least 0.1 % by weight of a reducing sugar is additionally added to the final mixture before torrefaction.

## Patentansprüche

1. Verfahren zur Behandlung eines Kakaobruchs oder einer Kakaomasse, bei dem man, ausgehend von 1 bis 15 Tage fermentierten Kakaobohnen, einen Bruch durch Zerkleinern der Bohnen oder eine Kakaomasse herstellt, mit mindestens einer technischen Protease in einem wässrigen Medium mit pH 3-8 mischt und die Mischung während einer für die Hydrolyse der Proteine und Peptide ausreichenden Zeit und Temperatur inkubiert.

2. Verfahren nach Anspruch 1, bei dem man die Mischung während einer Zeit und einer Temperatur inkubiert, die ausreichen, um mindestens 10 *µ*mol hydrophobe Aminosäuren pro g Trockenmasse und Hydrolyseprodukte, die mindestens das 1,4fache der ursprünglich in den fermentierten Kakaobohnen vorliegenden Hyrolyseprodukte betragen, zu erhalten.

3. Verfahren nach Anspruch 1, bei dem man einen Bruch oder eine Masse von 1 bis 15 Tage fermentierten Kakaobohnen herstellt, mit einem wässrigen Medium mit pH 3-6 mischt, die Mischung 10 min bis 20 h bei 40-60°C inkubiert, den pH der Mischung auf pH 4-8 einstellt, ihr mindestens eine technische Protease beigibt und sie 5 min bis 20 h bei 10-60°C inkubiert.

4. Verfahren nach Anspruch 1, bei dem man einen Bruch oder eine Masse aus 1 bis 15 Tage fermentierten Kakaobohnen herstellt, mit einem wässrigen Medium mit pH 3-8 mischt, der Mischung mindestens eine technische Protease beigibt und sie 5 min bis 20 h bei 10-60°C inkubiert.

5. Verfahren nach Anspruch 1, bei dem der Kakaobruch oder die Kakaomasse ausgehend von einer Mischung von Bohnen hergestellt wird, die sich in verschiedenen Fermentationszuständen befinden und/oder von verschiedenen Kakaobaum-Genotypen stammen.

6. Verfahren nach einem der Ansprüche 1 bis 5, bei dem die Mischung 10-80 % eines Kakaobohnenbruchs oder einer Kakaobohnenmasse und 1-100 Einheiten technische Protease pro g Mischung enthält.

7. Verfahren nach einem der Ansprüche 1 bis 5, bei dem man der Mischung außerdem mindestens ein technisches Enzym beigibt, das aus der Gruppe ausgewählt ist, die von Invertasen, Glycosidasen, Cellulasen, Pectinasen und Oxydasen gebildet wird.

8. Verfahren nach einem der Ansprüche 1 bis 5, bei dem man der endgültigen Mischung vor dem Rösten mindestens 0,1 Gew.-% reduzierenden Zucker beigibt.
